# FASCICULE DE BREVET EUROPEEN

(11) **EP 3 937 872 B1**
(45) Date de publication et mention de la délivrance du brevet: **01.03.2023**
(21) Numéro de dépôt: 20708503.6
(22) Date de dépôt: 10.03.2020
(51) Int. Cl.: A61G 5/10, A61G 3/06, B61D 23/00, B60P 1/44, B66B 9/08

(54) **DISPOSITIF ÉLÉVATEUR ROTATIF POUR PERSONNES À MOBILITÉ RÉDUITE**
DREHBARE HEBEVORRICHTUNG FÜR PERSONEN MIT EINGESCHRÄNKTER BEWEGLICHKEIT
ROTATABLE LIFTING DEVICE FOR PEOPLE WITH REDUCED MOBILITY

(30) Priorité: 15.03.2019 FR 1902696
(43) Date de publication de la demande: 19.01.2022
(73) Titulaire: ALSTOM Transport Technologies, 93400 Saint-Ouen (FR)
(72) Inventeur: BORRUEL, Gilbert, 31500 TOULOUSE (FR); BARRIEU, Nicolas, 31500 TOULOUSE (FR); DAUZATS, Stéphane, 81500 TEULAT (FR)
(74) Mandataire: Lavoix
(86) Numéro de dépôt international: PCT/EP2020/056351
(87) Numéro de publication internationale: WO 2020/187649

(56) Documents cités:
- EP-A1- 1 071 389
- US-A1- 2017 291 799

## Description

### DOMAINE TECHNIQUE

L'invention concerne le domaine des équipements d'accessibilité pour personnes à mobilité réduite. L'invention vise plus particulièrement un dispositif élévateur rotatif permettant de transférer une personne à mobilité réduite telle qu'une personne en fauteuil roulant, d'un premier niveau de plancher à un deuxième niveau de plancher.

### ART ANTÉRIEUR

La demande de brevet EP1071389 décrit un dispositif pour transférer des passagers à mobilité réduite entre un premier plancher et un compartiment passager d'un train. Ce dispositif comporte un vérin télescopique adapté à déplacer en translation verticale une surface de support sur laquelle le passager à mobilité réduite prend place.

La demande de brevet EP2641805 décrit un véhicule ferroviaire comportant une plateforme mobile verticalement entre un niveau de plancher du véhicule et un niveau de quai bas. La translation verticale de cette plateforme est actionnée par un dispositif de levage en forme de ciseaux situé sous la plateforme.

### EXPOSÉ DE L'INVENTION

L'invention a pour but d'améliorer les dispositifs de l'art antérieur.

À cet effet, l'invention vise un dispositif élévateur rotatif pour personnes à mobilité réduite, ce dispositif étant adapté à occuper au moins les deux positions suivantes :
- une position basse dans laquelle une plateforme est disposée à un premier niveau suivant une direction verticale et dans une première position angulaire autour d'un axe vertical ;
- une position haute dans laquelle la plateforme est disposée à un deuxième niveau, situé au-dessus du premier niveau suivant l'axe vertical, et dans une deuxième position angulaire autour de l'axe vertical.

Ce dispositif comporte de plus :
- un socle présentant une cavité ;
- un châssis de rotation monté mobile en rotation, autour d'un axe vertical, dans la cavité du socle ;
- une plateforme comprenant un plateau horizontal et un garde-corps qui s'étend selon un plan sensiblement perpendiculaire au plateau horizontal, cette plateforme étant d'une part montée mobile en translation verticale sur le châssis de rotation et étant d'autre part solidaire en rotation du châssis de rotation ;
le châssis de rotation comportant au moins un bras de levage s'étendant parallèlement et en vis-à-vis du garde-corps, le bras de levage comportant une poulie de levage située au-dessus du plateau horizontal, un dispositif de levage étant monté sur le châssis de rotation et comportant un lien souple qui passe par la poulie de levage et qui est rattaché à la plateforme.

Un tel dispositif élévateur rotatif forme une unité autonome compacte facilement intégrable dans le plancher, ou sur le plancher, de tout type de véhicule ou de bâtiment.

L'accessibilité aux personnes à mobilité réduite est aujourd'hui une exigence incontournable et est généralement imposée par des règles et normes visant les bâtiments et les véhicules, et plus spécifiquement ceux recevant du public. L'invention permet d'ajouter facilement cette fonction d'accessibilité aussi bien lors de la conception d'un véhicule ou d'un bâtiment neuf, que lors du réaménagement d'un bâtiment ou d'un véhicule existant. Le socle et le châssis du dispositif comportent en effet tous les moyens nécessaires à l'actionnement de la plateforme et l'intégration au sein d'un véhicule ou d'un bâtiment nécessite simplement la fixation du socle sur la structure du bâtiment ou du véhicule et les éventuels branchements électriques nécessaires.

Le dispositif selon l'invention ne nécessite aucune installation à intégrer autour (par exemple dans le plancher) comme il est courant dans l'art antérieur où des dispositifs à vérin et à charriot élévateur complexes et difficiles à intégrer nécessitent qu'une épaisseur de plusieurs dizaines de centimètres soit disponible en dessous et/ou autour du dispositif élévateur.

Le dispositif élévateur rotatif peut comporter les caractéristiques additionnelles suivantes, seules ou en combinaison :
- le rattachement du lien souple à la plateforme est réalisé au niveau du garde-corps ;
- le garde-corps comporte deux montants s'étendant à partir des rebords du plateau horizontal ;
- le châssis de rotation comporte un deuxième bras de levage, les deux bras de levage s'étendant chacun parallèlement et en vis-à-vis de l'un des montants du garde-corps, chacun de ces bras de levage comportant à son sommet une poulie de levage située au-dessus du plateau horizontal, le dispositif de levage comportant un deuxième lien souple, les deux liens souples passant chacun par l'une des poulies de levage ;
- chacun des liens souples est rattaché à l'un des montants du garde-corps ;
- le dispositif comporte un capotage fixé sur le garde-corps et enclosant le bras de levage ;
- le dispositif comporte un flasque de masquage fixé sur le châssis de rotation et dont la forme est complémentaire du capotage en permettant la translation verticale du capotage ;
- le garde-corps et le bras de levage sont reliés par des glissières dont l'axe de translation est vertical ;
- le plateau horizontal de la plateforme comporte une barrière antidérive déployable ;
- la cavité du socle est une cavité cylindrique dans laquelle le châssis de rotation est monté rotatif ;
- le socle comporte une entaille d'accès à la cavité cylindrique ;
- le châssis de rotation est monté rotatif selon un axe vertical sur un rail circulaire fixé dans la cavité cylindrique du socle ;
- le châssis de rotation comporte des coulisseaux assurant le guidage sur le rail circulaire ;
- le châssis de rotation comporte une roue engrenant sur le rail circulaire et commandant la rotation du châssis de rotation par rapport au socle ;
- le dispositif comporte un seuil rattaché au socle et dont le niveau est au-dessus du rail circulaire ;
- le bras de levage supporte la poulie de levage et une liaison glissière avec la plateforme ;
- le dispositif de levage comporte un enrouleur pour le lien souple commandé par un moteur et fixé sur le châssis de rotation ;
- le dispositif de levage est relié à la plateforme par un palonnier ;
- le socle comporte l'ensemble des interfaces mécaniques et électriques du dispositif.

### PRÉSENTATION DES FIGURES

D'autres caractéristiques et avantages de l'invention ressortiront de la description qui en est faite ci-après, à titre indicatif et nullement limitatif, en référence aux dessins annexés, dans lesquels :
[Fig.1] La figure 1 représente en perspective un dispositif élévateur rotatif selon l'invention, en position basse et dans une première position angulaire ;
[Fig.2] La figure 2 représente le dispositif de la figure 1 avec une barrière antidérive déployée ;
[Fig.3] La figure 3 représente le dispositif de la figure 2 en position haute ;
[Fig.4] La figure 4 représente le dispositif de la figure 3 dans une deuxième position angulaire ;
[Fig.5] La figure 5 représente le dispositif de la figure 4 dont la barrière antidérive a été abaissée ;
[Fig.6] La figure 6 est une vue éclatée du dispositif des figures 1 à 5 ;
[Fig.7] La figure 7 représente le châssis du dispositif des figures 1 à 6 ;
[Fig.8] La figure 8 représente les moyens de levage du dispositif des figures 1 à 6 ;
[Fig.9] La figure 9 est une vue en perspective partielle du châssis de la figure 7 ;
[Fig.10] La figure 10 représente le dispositif de la figure 1, dépourvu de ses capotages ;
[Fig.11] La figure 11 représente le châssis de la figure 7, associé au garde-corps du dispositif.

### DESCRIPTION DÉTAILLÉE

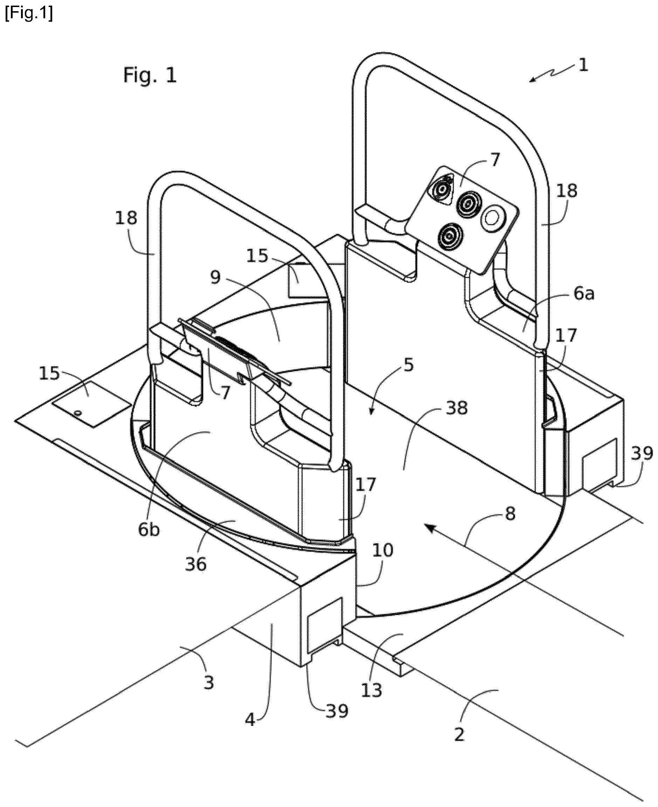

La figure 1 représente un dispositif élévateur rotatif 1 pour personnes à mobilité réduite. Ce dispositif élévateur rotatif 1 peut être utilisé pour permettre le déplacement entre différents niveaux de plancher pour, par exemple, les personnes en fauteuil roulant, les personnes transportant un enfant dans une poussette, les personnes transportant une charge lourde avec un charriot à roulettes, etc. Le dispositif élévateur rotatif 1 peut être utilisé dans tous bâtiments, notamment les bâtiments accueillant du public, et dans tous véhicules tels que avions, trains, autocars, etc.

Le dispositif 1 permet aux personnes à mobilité réduite de passer d'un premier niveau de plancher en entrant dans le dispositif 1 selon une première direction, à un deuxième niveau de plancher, en sortant du dispositif 1 selon une autre direction. Dans le présent exemple, tel que représenté à la figure 1, le dispositif 1 est agencé pour permettre le passage d'un premier plancher 2 à un deuxième plancher 3 qui est situé au-dessus du niveau du premier plancher 2 et qui lui est perpendiculaire.

Le dispositif 1 comporte ici un socle 4 et une plateforme 5. La plateforme 5 comporte un plateau horizontal 38 et un garde-corps formé, dans le présent exemple, de deux montants 6a, 6b. Un pupitre de commande 7 est fixé sur chaque montant 6a, 6b. Chaque pupitre de commande 7 comporte les commandes nécessaires au dispositif 1 telles que des touches commandant la montée ou la descente de la plateforme 5, des boutons d'arrêt d'urgence et d'appel de secours. La présence du même pupitre de commande 7 sur chaque montant 6a, 6b du garde-corps permet à la personne à mobilité réduite de commander le dispositif 1 indifféremment sur sa droite ou sur sa gauche. Optionnellement, le pupitre de commande intègre un dispositif émetteur-récepteur permettant le pilotage à distance de la plateforme à partir d'un protocole de communication avec des applications installées sur des médias (téléphone, tablettes...), ce qui renforce le caractère de module compact du dispositif 1.

Le mode opératoire du dispositif 1 va être décrit en référence aux figures 1 à 5, selon un exemple ou une personne à mobilité réduite souhaite passer d'un plancher bas à un plancher haut. Sur la figure 1, le dispositif 1 est prêt pour recevoir une personne à mobilité réduite qui se présente sur le premier plancher 2 et qui entre dans le dispositif 1 suivant la direction 8.

Le socle 4 comporte une cavité cylindrique 9 recevant la plateforme 5. Le socle 4 présente également une entaille 10 permettant l'accès à la cavité cylindrique 9. C'est par cette entaille 10 que la personne à mobilité réduite peut entrer à partir du deuxième plancher 3 dans le dispositif 1 et prendre place sur la plateforme 5.

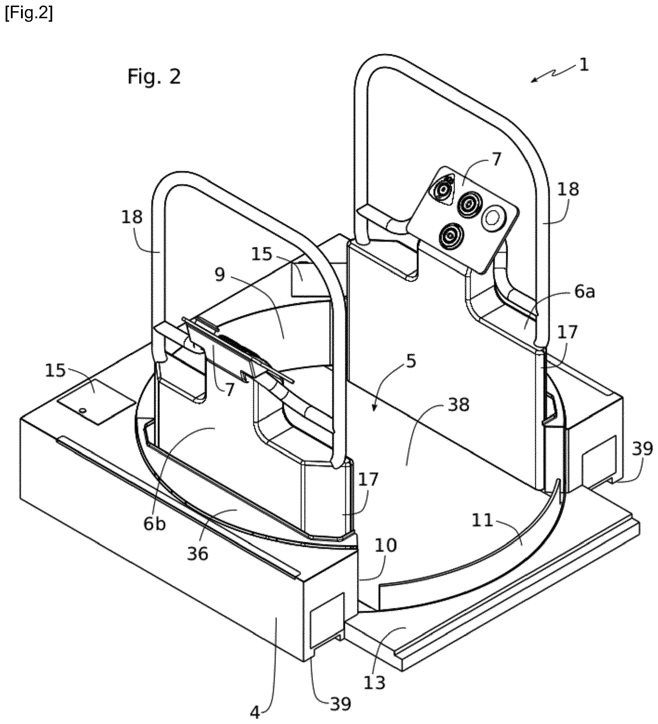

La figure 2 illustre l'étape suivante dans laquelle, une fois la personne à mobilité réduite (non représentée sur les figures) installée sur la plateforme 5, une barrière antidérive 11 est déployée. La commande du déploiement de la barrière antidérive 11 peut être assurée par tous moyens adéquats tels que détection automatique de la présence d'une personne sur la plateforme 5 ou comme première étape d'une procédure de montée déclenchée par l'appui d'une touche sur l'un des pupitres de commande 7. La barrière antidérive 11 garantit qu'un fauteuil roulant, ou tout autre moyen sur roues, reste bien sur le plateau horizontal 38 au cours de la manoeuvre.

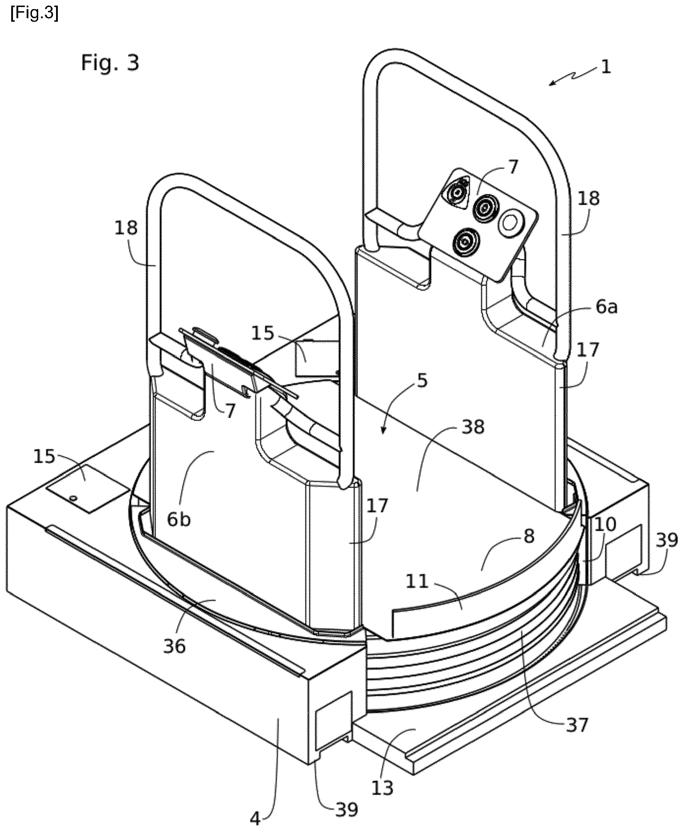

La figure 3 illustre l'étape suivante dans laquelle la plateforme 5 subit une translation verticale par rapport au socle 4, tout en restant dans la cavité cylindrique 9, jusqu'à ce que le plateau 38 atteigne le niveau du deuxième plancher 3 (les premier plancher 2 et deuxième plancher 3 n'ont pas été représentés par souci de simplicité sur les figures 2 à 5).

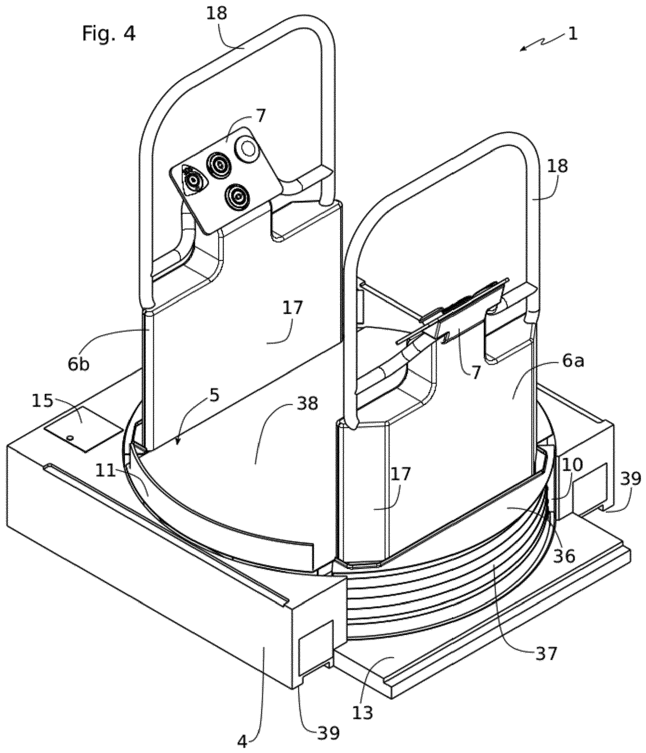

La figure 4 illustre l'étape suivante dans laquelle la plateforme 5 subit une rotation autour d'un axe vertical, tout en restant en place dans la cavité cylindrique 9, jusqu'à atteindre une deuxième position angulaire qui, dans le présent exemple, correspond à une rotation de 90° par rapport à la position angulaire de la plateforme 5 sur les figures 1 à 3.

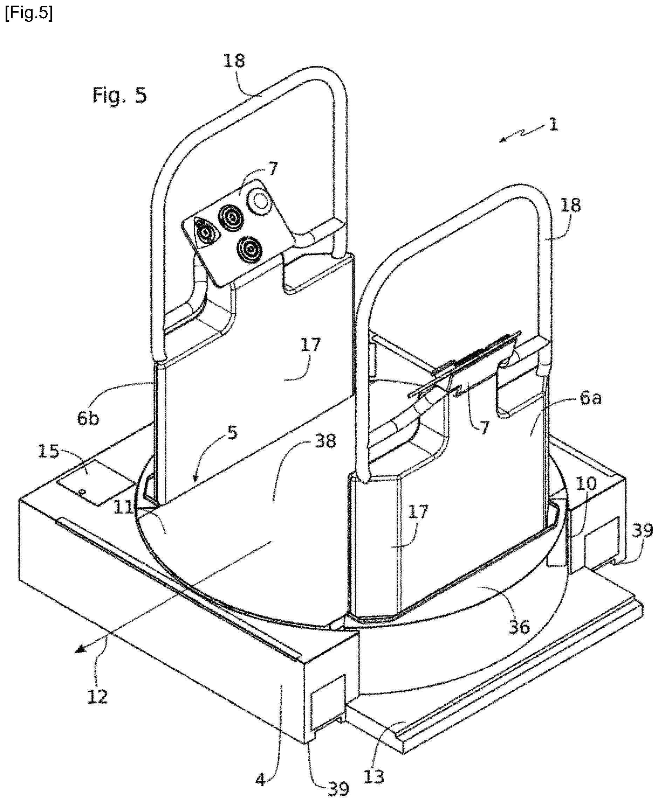

Lors de l'étape suivante, représentée à la figure 5, la barrière antidérive 11 est abaissée et la personne à mobilité réduite peut alors sortir du dispositif 1 suivant la direction de sortie 12.

Dans l'autre sens, les opérations permettant la descente d'une personne à mobilité réduite entre le plancher de deuxième niveau et le plancher de premier niveau se fait dans l'ordre inverse de ce qui vient d'être décrit.

Une personne à mobilité réduite peut ainsi, grâce au dispositif 1, passer d'un premier niveau de plancher selon une première position angulaire à un deuxième niveau de plancher selon une deuxième position angulaire.

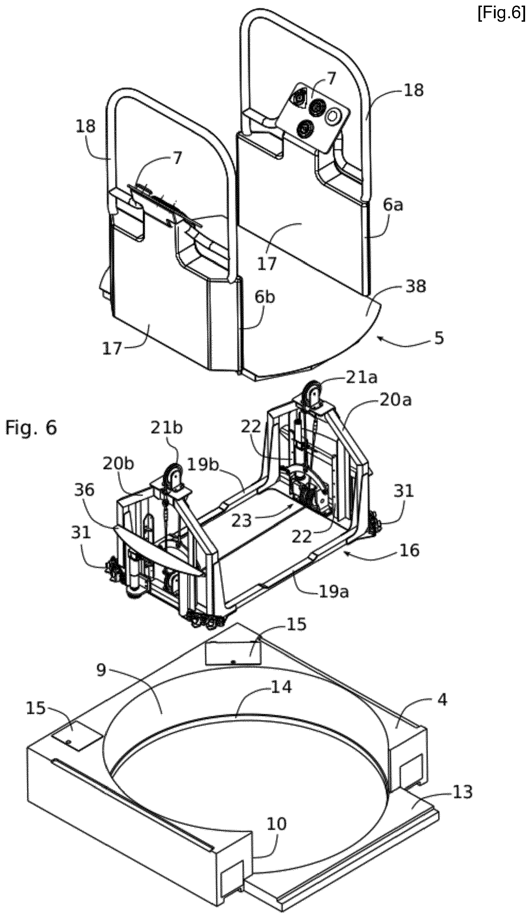

La figure 6 est une vue éclatée montrant les principaux éléments qui constituent le dispositif 1. Le socle 4 comporte, comme exposé précédemment, une cavité cylindrique 9 permettant la translation verticale de la plateforme 5 et sa rotation autour d'un axe vertical, ainsi que l'entaille 10 qui permet le passage en position basse de la personne à mobilité réduite. Le socle 4 comporte ici de plus un seuil 13 facilitant l'intégration du dispositif 1 avec le plancher de premier niveau. Dans le présent exemple, le seuil 13 est horizontal pour son intégration en continuité avec un plancher. En variante, le seuil 13 peut être une rampe d'accès à la cavité 9, ce qui permet de fixer le dispositif 1 directement sur un plancher, sans qu'aucune ouverture ne soit requise dans le plancher.

Le socle 4 est le support de l'ensemble des éléments fixes et mobiles du dispositif 1. L'intégration du dispositif 1 au sein d'un véhicule ou d'un bâtiment consiste donc essentiellement à intégrer le socle 4 et à le fixer à la structure du véhicule ou du bâtiment de sorte que les planchers 2, 3 soient dument positionnés. Le socle 4 comporte toutes les interfaces mécaniques et électriques permettant la mise en place et le fonctionnement du dispositif 1 dans un plancher. Le socle 4 peut par exemple être simplement fixé par des interfaces mécaniques (constituées de pieds de support 39 dans cet exemple) situés à sa base, et pouvant être fixées sur toute structure.

Le socle 4 comporte, à la base de la cavité cylindrique 9, un rail circulaire 14 qui participe aux fonctions de support et de rotation, autour d'un axe vertical, de la plateforme 5. Le seuil 13 est dimensionné pour définir un niveau de plancher situé au-dessus du rail circulaire 14. Le socle 4 peut de plus supporter différents coffrets 15 destinés à loger les éléments électriques et électroniques requis pour la commande du dispositif 1. Le socle 4 permet ainsi la fourniture d'un dispositif 1 compact, modulaire et autonome. En plus de la fixation du socle 4 à la structure du véhicule ou du bâtiment concerné, la pose du dispositif 1 nécessite simplement son raccordement électrique de puissance et de données.

Le dispositif 1 comporte de plus un châssis de rotation 16 qui est monté sur le rail circulaire 14 du socle 4.

Le dispositif 1 comporte enfin, tel que représenté sur la vue éclatée de la figure 6, la plateforme 5. Chaque montant 6a, 6b du garde-corps comporte un capot 17 qui est surmonté du pupitre de commande 7 et d'une rambarde 18.

La plateforme 5 est montée mobile en translation sur le châssis de rotation 16 et l'ensemble ainsi formé est monté mobile en rotation sur le socle 4.

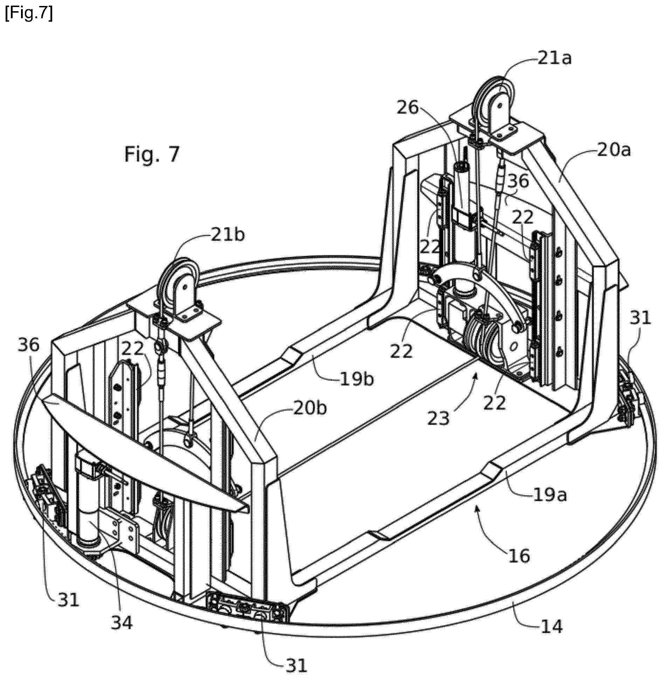

La figure 7 illustre le châssis de rotation 16 lorsqu'il est monté sur le rail circulaire du socle 4 (le reste du socle 4 n'a pas été représenté sur la figure 7). Le châssis 16 est ici réalisé par un assemblage tubulaire constitué de poutres telles que des poutres métalliques ou en matériau composite. Le châssis 16 comporte une structure horizontale 19 formée ici de deux poutres parallèles 19a, 19b ainsi que deux bras de levage 20a, 20b latéraux s'étendant verticalement à une extrémité de la structure horizontale 19. Les bras de levage 20a, 20b sont également formés chacun d'une structure tubulaire et peuvent, en variante, être réalisés par tout autre procédé adéquat tel que le moulage. Les bras de levage 20a, 20b assurent deux fonctions essentielles :
- une fonction de support d'une poulie de levage 21a, 21b ;
- une fonction de support de moyen de guidage en translation verticale pour la plateforme 5, ces moyens étant ici constitués par des glissières 22.

Les poulies de levage 21a, 21b, sont montées sur les bras de levage 20a, 20b de sorte à être toutes deux positionnées au-dessus de la plateforme 5, quelle que soit la position verticale de cette dernière. La plateforme 5 est montée sur les glissières 22 qui permettent son guidage en translation verticale et définissent les limites haute et basse de sa course, à l'aide de butées, de capteurs de fin de course, ou de tout autre élément adapté.

Le châssis de rotation 16 remplit de plus une fonction de support pour un dispositif de levage 23 dont la fonction est de commander la translation verticale de la plateforme 5.

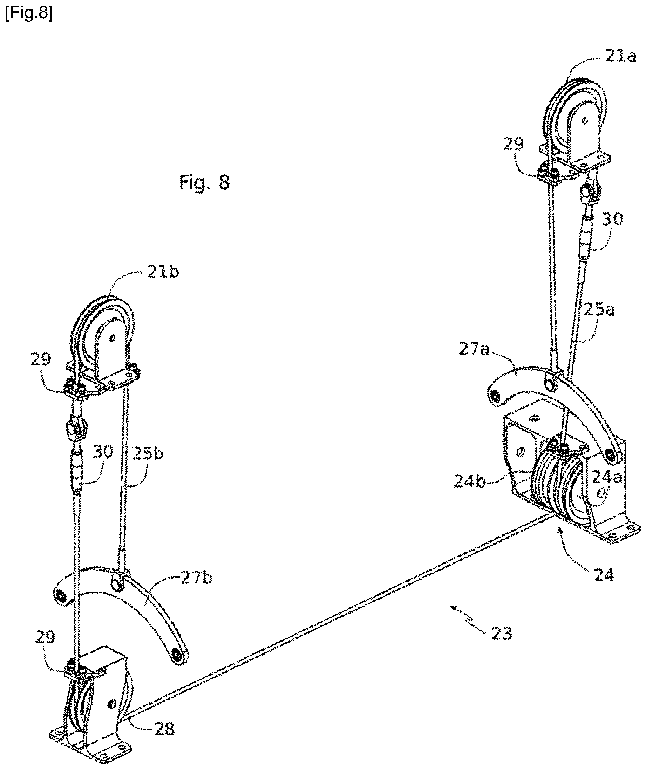

Le dispositif de levage 23 est décrit plus en détail en référence à la figure 8 qui le représente seul. Le dispositif de levage 23 comporte un enrouleur double 24 comportant deux tambours 24a, 24b, solidaires et permettant l'enroulement respectivement d'un premier lien souple 25a et d'un deuxième lien souple 25b. Le lien souple 25a, 25b, peut être constitué par tout moyen adapté à être enroulé sur l'enrouleur 24 et à transmettre un effort de traction permettant le levage de la plateforme 5. Un tel lien souple peut être par exemple constitué d'un câble métallique, d'un cordage à faible élasticité, d'une sangle ou de tout autre moyen adapté. Dans le présent exemple, le lien souple est constitué par un câble métallique dont le diamètre est de plusieurs millimètres et qui est adapté à la charge maximale prévue pour la plateforme 5. L'enrouleur 24 est actionné en rotation par un moteur 26 (visible à la figure 7), permettant l'enroulement et le déroulement simultané des liens souples 25a, 25b. Le lien souple 25a relie son tambour 24a de l'enrouleur 24 à un premier palonnier 27a en passant par la poulie de levage 21a. L'autre lien souple 25b relie le tambour 24b de l'enrouleur 24 à un deuxième palonnier 27b en passant par une poulie de renvoi 28 et par la poulie de levage 21b.

Les liens souples 25a, 25b sont guidés et maintenus en place par des guide-câbles 29. Des ridoirs 30 permettent un réglage fin de la position des palonniers 27a, 27b pour une traction symétrique sur la plateforme 5. Le dispositif de levage 23 est agencé pour que la rotation dans le sens d'enroulement de l'enrouleur 24 entraine la montée des palonniers 27a, 27b, et à l'inverse, la rotation dans le sens du déroulement de l'enrouleur 24 provoque la descente des palonniers 27a, 27b. Les palonniers 27a, 27b sont reliés à la plateforme 5 de sorte que cette translation verticale simultanée des deux palonniers 27a, 27b provoque la montée ou la descente de la plateforme 5.

En référence de nouveau à la figure 7, le dispositif de levage 23 est donc monté sur le châssis 16 de sorte que le déplacement vertical simultané des deux palonniers 27a, 27b entraine la translation verticale de la plateforme 5 le long des glissières 22.

Le châssis 16 est monté dans le socle 4 par l'intermédiaire du rail circulaire 14 de sorte que le châssis 16 soit mobile en rotation autour d'un axe vertical. Le châssis 16 est ici monté sur le rail circulaire 14 par l'intermédiaire de quatre coulisseaux 31. Dans le présent exemple, le rail circulaire 14 présente une section en T et les coulisseaux 31 sont munis de galets roulants sur le rail circulaire 14. En variante, tout autre moyen adapté à monter à rotation le châssis 16 sur le socle 4 peut être employé, par exemple, une fixation du châssis 16 sur le socle 4 par un pivot central d'axe vertical, et de roulements adaptés.

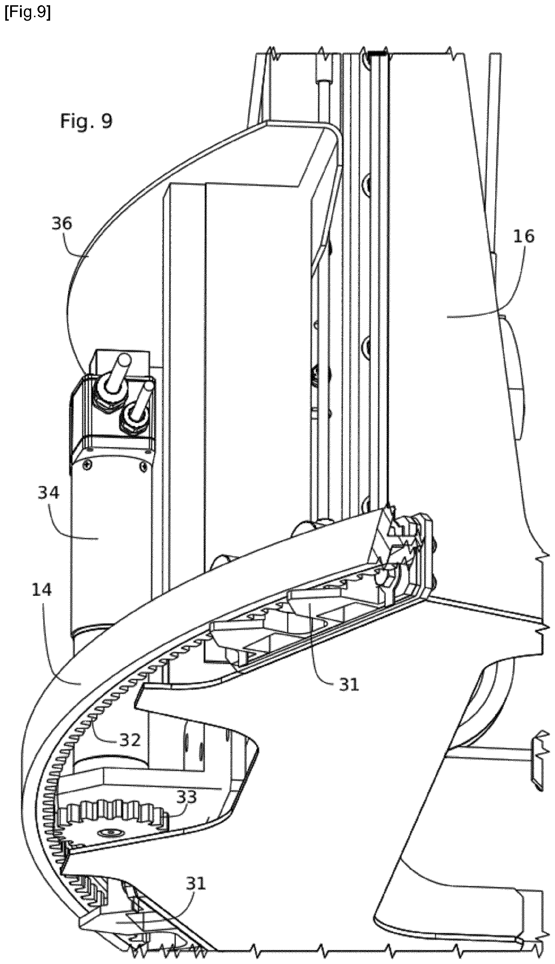

La figure 9 est une vue partielle agrandie de la figure 7, montrant deux des coulisseaux 31. La figure 9 montre de plus que le rail circulaire 14 comporte une crémaillère 32 sur laquelle engrène un pignon 33 monté sur le châssis 16 et actionné en rotation par un moteur 34. Le support et le guidage en rotation du châssis 16 sur le socle 4 sont ainsi assurés par le rail circulaire 14, de même que la commande de la rotation modifiant la position angulaire du châssis 16, grâce au dispositif de positionnement angulaire constitué par le pignon 33 et le moteur 34. En variante, le dispositif de positionnement angulaire peut être constitué par tout autre moyen adapté tels que des moyens à friction.

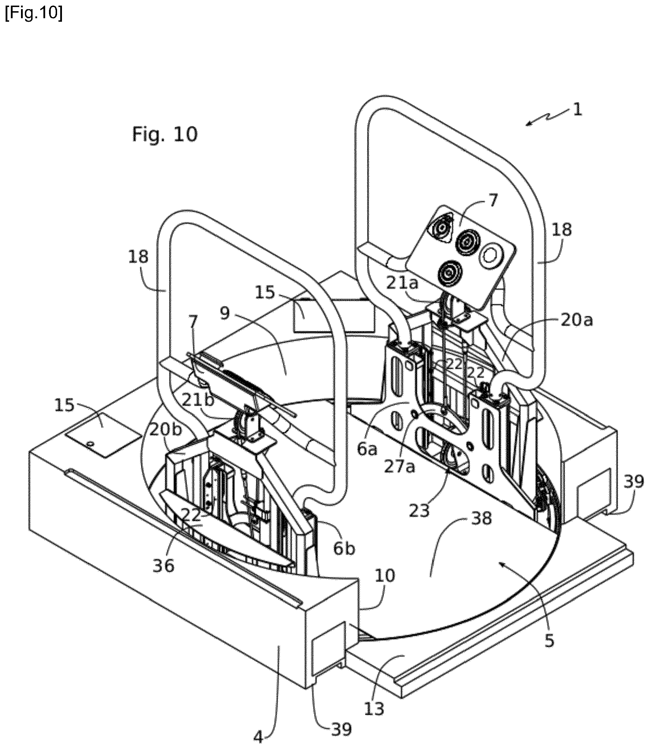

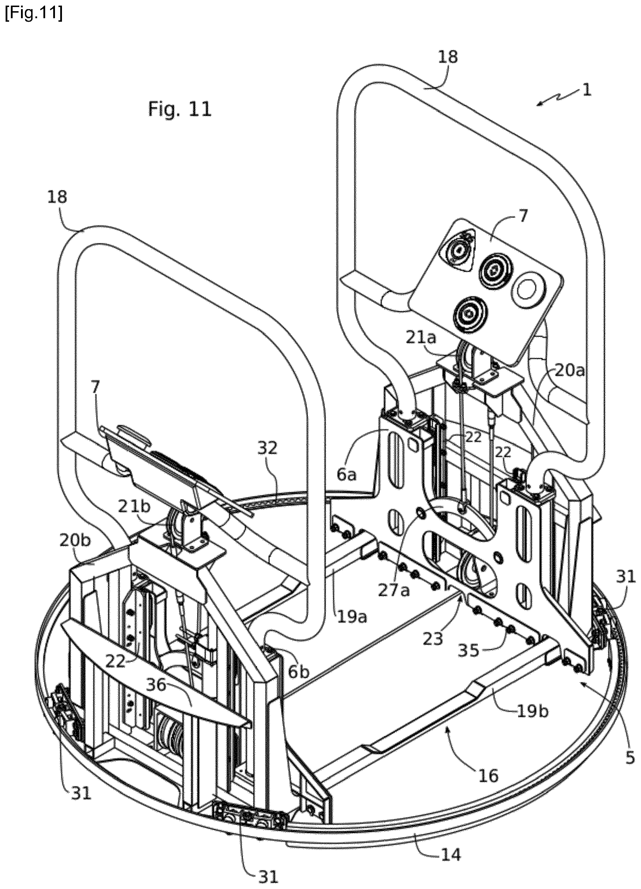

Les figures 10 et 11 illustrent le montage de la plateforme 5 sur le châssis 16 qui vient d'être décrit. La figure 10 représente le dispositif 1 dans sa position de la figure 1, les montants 6a, 6b du garde-corps étant dépourvus de leur capot 17. La vue de la figure 10 montre qu'à l'intérieur de chaque capot 17 du garde-corps, le montant 6a, 6b s'étend en parallèle et en vis-à-vis du bras de levage 20a, 20b.

La plateforme 5 est montée sur le châssis 16 par l'intermédiaire des montants 6a, 6b qui sont chacun montés sur les glissières 22 du châssis 16. La plateforme 5 est ainsi mobile en translation verticale sur le châssis 16 tout en étant solidaire en rotation du châssis 16.

La figure 11 est une vue similaire à la figure 10 dans laquelle le socle 4 et le plateau 38 de la plateforme 5 n'ont pas été représentés. Les montants 6a, 6b comportent des fixations 35 permettant leur rattachement sur chaque bord latéral de du plateau 38 de sorte que la translation verticale simultanée des deux montants 6a, 6b du garde-corps entraine la translation du plateau 38. Les fixations 35 rendent solidaires le plateau 38 et les deux montants 6a, 6b du garde-corps qui forment alors une seule pièce rattachée au châssis 16 par les glissières 22. Chaque palonnier 27a, 27b est fixé sur le montant 6a, 6b correspondant. Ainsi, l'actionnement du dispositif de levage 23 entraine la translation verticale de la plateforme 5. Durant cette translation verticale, les montants 6a, 6b se déplacent parallèlement aux bras de levage 20a, 20b correspondant, tout en restant toujours parallèles et en vis-à-vis de ce bras de levage 20a, 20b. La hauteur des bras de levage 20a, 20b est choisie pour que, même lorsque la plateforme 5 est dans sa position de hauteur maximale suite à sa translation verticale vers le haut, les poulies de levage 21a, 21b soient toujours au-dessus du plateau 38. Le capot 17 de chaque montant 6a, 6b est fixé sur ce montant 6a, 6b et entoure non seulement ce montant 6a, 6b mais aussi le bras de levage 20a, 20b correspondant, de manière à enclore le bras de levage 20a, 20b.

Les figures 2 et 3 illustrent les deux positions extrêmes haute et basse de la translation verticale de la plateforme 5. Ces figures montrent que durant la translation verticale de la plateforme 5, les capots 17 sont bien entendu également translatés car solidaires des montants 6a, 6b tout en englobant les bras de levage 20a, 20b de sorte que le mécanisme de levage n'est jamais apparent, garantissant ainsi la sécurité. La sécurité peut également être renforcée en restreignant l'accès aux mécanismes par l'ajout de flasques 36 de masquage fixés sur le châssis 16 et dont la forme est complémentaire des capots 17 tout en permettant la translation de ces derniers.

Pour des raisons de sécurité également, un dispositif de masquage qui est ici constitué d'un soufflet 37 peut être prévu pour empêcher l'accès au-dessous de la plateforme 5 lorsque cette dernière est sa position haute (voir figure 3). En variante, la fonction du soufflet 37 peut être assurée par une barrière logée dans le socle 4 et déployable en rotation autour d'un axe vertical.

Par ailleurs, la barrière antidérive 11 est montée mobile sur le plateau 38 de la plateforme 5, par exemple par des glissières et une commande motorisée adéquate, pour pouvoir être déployée ou au contraire abaissée.

Des variantes de réalisation du dispositif élévateur rotatif peuvent être envisagées sans sortir du cadre de l'invention. Le dispositif peut par exemple occuper toute autre position angulaire différente de la position d'entrée et de la position de sortie disposées à 90° l'une de l'autre, données ici en exemple.

Par ailleurs, dans le mode opératoire donné en exemple en référence aux figures 1 à 5, la translation verticale de la plateforme 5 puis sa rotation autour d'un axe vertical sont réalisées séquentiellement et, en variante, l'agencement du dispositif 1 selon l'invention permet de réaliser ces deux mouvements simultanément.

Dans l'exemple décrit, le garde-corps comporte deux montants 6a, 6b mais il est cependant possible de ne prévoir qu'un seul montant au garde-corps et, par conséquent, un seul bras de levage et un seul lien souple.

## Revendications

1. Dispositif élévateur rotatif (1) pour personnes à mobilité réduite, ce dispositif étant adapté à occuper au moins les deux positions suivantes :
- une position basse dans laquelle une plateforme est disposée à un premier niveau suivant une direction verticale et dans une première position angulaire autour d'un axe vertical ;
- une position haute dans laquelle la plateforme est disposée à un deuxième niveau, situé au-dessus du premier niveau suivant l'axe vertical, et dans une deuxième position angulaire autour de l'axe vertical ;
ce dispositif étant **caractérisé en ce qu'**il comporte :
- un socle (4) présentant une cavité (9) ;
- un châssis de rotation (16) monté mobile en rotation, autour d'un axe vertical, dans la cavité (9) du socle (4) ;
- une plateforme (5) comprenant un plateau horizontal (38) et un garde-corps (6a, 6b) qui s'étend selon un plan sensiblement perpendiculaire au plateau horizontal (38), cette plateforme (5) étant d'une part montée mobile en translation verticale sur le châssis de rotation (16) et étant d'autre part solidaire en rotation du châssis de rotation (16) ;
le châssis de rotation (16) comportant au moins un bras de levage (20a, 20b) s'étendant parallèlement et en vis-à-vis du garde-corps (6a, 6b), le bras de levage (20a, 20b) comportant une poulie de levage (21a, 21b) située au-dessus du plateau horizontal (38), un dispositif de levage (23) étant monté sur le châssis de rotation (16) et comportant un lien souple (25a, 25b) qui passe par la poulie de levage (21a, 21b) et qui est rattaché à la plateforme (5).

2. Dispositif selon l'une quelconque des revendications précédentes, **caractérisé en ce que** le rattachement du lien souple (25a, 25b) à la plateforme (5) est réalisé au niveau du garde-corps (6a, 6b).

3. Dispositif selon l'une quelconque des revendications précédentes, **caractérisé en ce que** le garde-corps comporte deux montants (6a, 6b) s'étendant à partir des rebords du plateau horizontal (38).

4. Dispositif selon la revendication 3, **caractérisé en ce que** le châssis de rotation (16) comporte un deuxième bras de levage, les deux bras de levage (20a, 20b) s'étendant chacun parallèlement et en vis-à-vis de l'un des montants (6a, 6b) du garde-corps, chacun de ces bras de levage (20a, 20b) comportant à son sommet une poulie de levage (21a, 21b) située au-dessus du plateau horizontal (38), le dispositif de levage (23) comportant un deuxième lien souple, les deux liens souples (25a, 25b) passant chacun par l'une des poulies de levage (21a, 21b).

5. Dispositif selon la revendication 4, **caractérisé en ce que** chacun des liens souples (25a, 25b) est rattaché à l'un des montants (6a, 6b) du garde-corps.

6. Dispositif selon l'une quelconque des revendications précédentes, **caractérisé en ce qu'**il comporte un capotage (17) fixé sur le garde-corps (6a, 6b) et enclosant le bras de levage (20a, 20b).

7. Dispositif selon la revendication 6, **caractérisé en ce qu'**il comporte un flasque (36) de masquage fixé sur le châssis de rotation (16) et dont la forme est complémentaire du capotage (17) en permettant la translation verticale du capotage (17).

8. Dispositif selon l'une quelconque des revendications précédentes, **caractérisé en ce que** le garde-corps (6a, 6b) et le bras de levage (20a, 20b) sont reliés par des glissières (22) dont l'axe de translation est vertical.

9. Dispositif selon l'une quelconque des revendications précédentes, **caractérisé en ce que** le plateau horizontal (38) de la plateforme (5) comporte une barrière antidérive (11) déployable.

10. Dispositif selon l'une quelconque des revendications précédentes, **caractérisé en ce que** la cavité (9) du socle (4) est une cavité cylindrique dans laquelle le châssis de rotation (16) est monté rotatif.

11. Dispositif selon la revendication 10, **caractérisé en ce que** le socle (4) comporte une entaille (10) d'accès à la cavité cylindrique (9).

12. Dispositif selon l'une des revendications 10 et 11, **caractérisé en ce que** le châssis de rotation (16) est monté rotatif selon un axe vertical sur un rail circulaire (14) fixé dans la cavité cylindrique (10) du socle (4).

13. Dispositif selon la revendication 12, **caractérisé en ce que** le châssis de rotation (16) comporte des coulisseaux (31) assurant le guidage sur le rail circulaire (14).

14. Dispositif selon l'une des revendications 12 et 13, **caractérisé en ce que** le châssis de rotation (16) comporte une roue (33) engrenant sur le rail circulaire (14) et commandant la rotation du châssis de rotation (16) par rapport au socle (4).

15. Dispositif selon l'une des revendications 12 à 14, **caractérisé en ce qu'**il comporte un seuil (13) rattaché au socle (4) et dont le niveau est au-dessus du rail circulaire (14).

16. Dispositif selon l'une quelconque des revendications précédentes, **caractérisé en ce que** le bras de levage (20a, 20b) supporte la poulie de levage (21a, 21b) et une liaison glissière (22) avec la plateforme (5).

17. Dispositif selon l'une quelconque des revendications précédentes, **caractérisé en ce que** le dispositif de levage (23) comporte un enrouleur (24) pour le lien souple commandé par un moteur (26) et fixé sur le châssis de rotation (16).

18. Dispositif selon l'une quelconque des revendications précédentes, **caractérisé en ce que** le dispositif de levage (23) est relié à la plateforme (5) par un palonnier (27a, 27b).

19. Dispositif selon l'une quelconque des revendications précédentes, **caractérisé en ce que** le socle (4) comporte l'ensemble des interfaces mécaniques et électriques du dispositif.

## Patentansprüche

1. Drehende Hebevorrichtung (1) für Personen mit eingeschränkter Mobilität, wobei diese Vorrichtung angepasst ist, um mindestens die zwei folgenden Positionen einzunehmen:
- eine untere Position, in der eine Plattform auf einer ersten Ebene entlang einer vertikalen Richtung und in einer ersten Winkelposition um eine vertikale Achse angeordnet ist;
- eine obere Position, in der die Plattform auf einer zweiten Ebene angeordnet ist, die sich entlang der vertikalen Achse über der ersten Ebene befindet, und in einer zweiten Winkelposition um die vertikale Achse;
wobei diese Vorrichtung **dadurch gekennzeichnet ist, dass** sie Folgendes umfasst:
- einen Sockel (4), der einen Hohlraum (9) aufweist;
- ein Drehgestell (16), das drehbar um eine vertikale Achse in dem Hohlraum (9) des Sockels (4) montiert ist;
- eine Plattform (5), umfassend eine horizontalen Platte (38) und ein Geländer (6a, 6b), das sich entlang einer Ebene im Wesentlichen senkrecht zu der horizontalen Platte (38) erstreckt, wobei diese Plattform (5) einerseits vertikal verschiebbar auf dem Drehgestell (16) montiert ist und andererseits drehfest mit dem Drehgestell (16) verbunden ist;
das Drehgestell (16) umfassend mindestens einen Hebearm (20a, 20b), der sich parallel und gegenüber dem Geländer (6a, 6b) erstreckt, der Hebearm (20a, 20b) umfassend eine Heberolle (21a, 21b), die sich oberhalb der horizontalen Platte (38) befindet, wobei eine Hebevorrichtung (23) an dem Drehgestell (16) montiert ist und eine flexible Verbindung (25a, 25b) umfasst, die durch die Heberolle (21a, 21b) verläuft und an der Plattform (5) angebracht ist.

2. Vorrichtung nach einem der vorherigen Ansprüche, **dadurch gekennzeichnet, dass** das Anbringen der flexiblen Verbindung (25a, 25b) an der Plattform (5) auf Ebene des Geländers (6a, 6b) realisiert wird.

3. Vorrichtung nach einem der vorherigen Ansprüche, **dadurch gekennzeichnet, dass** das Geländer zwei Pfosten (6a, 6b) umfasst, die sich von den Rändern der horizontalen Platte (38) aus erstrecken.

4. Vorrichtung nach Anspruch 3, **dadurch gekennzeichnet, dass** das Drehgestell (16) einen zweiten Hebearm aufweist, wobei sich die zwei Hebearme (20a, 20b) jeweils parallel und einander gegenüber zu einem der Pfosten (6a, 6b) des Geländers erstrecken, wobei jeder dieser Hebearme (20a, 20b) an seiner Spitze eine Heberolle (21a, 21b) umfasst, die sich oberhalb der horizontalen Platte (38) befindet, wobei die Hebevorrichtung (23) eine zweite flexible Verbindung umfasst, wobei die zwei flexiblen Verbindungen (25a, 25b) jeweils durch eine der Heberollen (21a, 21b) verlaufen.

5. Vorrichtung nach Anspruch 4, **dadurch gekennzeichnet, dass** jede der flexiblen Verbindungen (25a, 25b) an einem der Pfosten (6a, 6b) des Geländers angebracht ist.

6. Vorrichtung nach einem der vorherigen Ansprüche, **dadurch gekennzeichnet, dass** sie eine Verkleidung (17) umfasst, die an dem Geländer (6a, 6b) befestigt ist und den Hebearm (20a, 20b) umschließt.

7. Vorrichtung nach Anspruch 6, **dadurch gekennzeichnet, dass** sie einen Maskierungsflansch (36) umfasst, der an dem Drehgestell (16) befestigt ist und dessen Form komplementär zu der Verkleidung (17) ist, indem es die vertikale Verschiebung der Verkleidung (17) ermöglicht.

8. Vorrichtung nach einem der vorherigen Ansprüche, **dadurch gekennzeichnet, dass** das Geländer (6a, 6b) und der Hebearm (20a, 20b) durch Gleitschienen (22) verbunden sind, deren Verschiebeachse vertikal ist.

9. Vorrichtung nach einem der vorherigen Ansprüche, **dadurch gekennzeichnet, dass** die horizontale Platte (38) der Plattform (5) eine ausfahrbare Trittschutzbarriere (11) umfasst.

10. Vorrichtung nach einem der vorherigen Ansprüche, **dadurch gekennzeichnet, dass** der Hohlraum (9) des Sockels (4) ein zylindrischer Hohlraum ist, in dem das Drehgestell (16) drehbar montiert ist.

11. Vorrichtung nach Anspruch 10, **dadurch gekennzeichnet, dass** der Sockel (4) eine Einkerbung (10) für den Zugang zu dem zylindrischen Hohlraum (9) umfasst.

12. Vorrichtung nach einem der Ansprüche 10 und 11, **dadurch gekennzeichnet, dass** das Drehgestell (16) um eine vertikale Achse drehbar auf einer kreisförmigen Schiene (14) montiert ist, die in dem zylindrischen Hohlraum (10) des Sockels (4) befestigt ist.

13. Vorrichtung nach Anspruch 12, **dadurch gekennzeichnet, dass** das Drehgestell (16) Gleitstücke (31) umfasst, die die Führung auf der kreisförmigen Schiene (14) gewährleisten.

14. Vorrichtung nach einem der Ansprüche 12 oder und 13, **dadurch gekennzeichnet, dass** das Drehgestell (16) ein Rad (33) umfasst, das die kreisförmige Schiene (14) eingreift und die Drehung des Drehgestells (16) in Bezug auf den Sockel (4) steuert.

15. Vorrichtung nach einem der Ansprüche 12 bis 14, **dadurch gekennzeichnet, dass** sie eine Schwelle (13) umfasst, die an dem Sockel (4) angebracht ist und deren Höhe über der kreisförmigen Schiene (14) ist.

16. Vorrichtung nach einem der vorherigen Ansprüche, **dadurch gekennzeichnet, dass** der Hebearm (20a, 20b) die Heberolle (21a, 21b) und eine Gleitverbindung (22) mit der Plattform (5) trägt.

17. Vorrichtung nach einem der vorherigen Ansprüche, **dadurch gekennzeichnet, dass** die Hebevorrichtung (23) einen Aufwickler (24) für die flexible Verbindung umfasst, die von einem Motor (26) angetrieben wird und an dem Drehgestell (16) befestigt ist.

18. Vorrichtung nach einem der vorherigen Ansprüche, **dadurch gekennzeichnet, dass** die Hebevorrichtung (23) über eine Traverse (27a, 27b) mit der Plattform (5) verbunden ist.

19. Vorrichtung nach einem der vorherigen Ansprüche, **dadurch gekennzeichnet, dass** der Sockel (4) die Gesamtheit der mechanischen und elektrischen Schnittstellen der Vorrichtung umfasst.

## Claims

1. A rotatable lifting device (1) for people with reduced mobility, the device being adapted to occupy at least the following two positions:
- a lower position in which a platform is arranged at a first level in a vertical direction and in a first angular position about a vertical axis;
- a high position in which the platform is arranged at a second level, located above the first level along the vertical axis, and in a second angular position around the vertical axis;
this device being **characterised in that** it comprises:
- a base (4) with a cavity (9);
- a rotation frame (16) mounted in the cavity (9) of the base (4) so that it can rotate about a vertical axis;
- a platform (5) comprising a horizontal plate (38) and a guardrail (6a, 6b) which extends in a plane substantially perpendicular to the horizontal plate (38), this platform (5) being on the one hand mounted so as to be movable in vertical translation on the rotation frame (16) and on the other hand being fixed in rotation to the rotation frame (16);
the rotation frame (16) comprising at least one lifting arm (20a, 20b) extending parallel to and opposite the railing (6a, 6b), the lifting arm (20a, 20b) comprising a lifting pulley (21a, 21b) above the horizontal plate (38), a lifting device (23) being mounted on the rotating frame (16) and comprising a flexible link (25a, 25b) which passes through the lifting pulley (21a, 21b) and is connected to the platform (5).

2. The device according to any of the preceding claims, **characterised in that** the connection of the flexible link (25a, 25b) to the platform (5) is at the level of the guardrail (6a, 6b).

3. The device according to any of the preceding claims, **characterised in that** the guardrail comprises two uprights (6a, 6b) extending from the edges of the horizontal plate (38).

4. The device according to claim 3, **characterised in that** the rotation frame (16) comprises a second lifting arm, the two lifting arms (20a, 20b) each extending parallel and opposite one of the uprights (6a, 6b) of the guardrail, each of these lifting arms (20a, 20b) comprising at its top a lifting pulley (21a, 21b) located above the horizontal plate (38), the lifting device (23) comprising a second flexible link, the two flexible links (25a, 25b) each passing through one of the lifting pulleys (21a, 21b).

5. The device according to claim 4, **characterised in that** each of the flexible links (25a, 25b) is attached to one of the uprights (6a, 6b) of the guardrail.

6. The device according to any of the preceding claims, **characterised in that** it comprises a cover (17) fixed to the guardrail (6a, 6b) and enclosing the lifting arm (20a, 20b).

7. The device according to claim 6, **characterised in that** it comprises a masking flange (36) fixed to the rotation frame (16) and the shape of which is complementary to the cover (17) while allowing the cover (17) to move vertically.

8. The device according to any of the preceding claims, **characterised in that** the guardrail (6a, 6b) and the lifting arm (20a, 20b) are connected by guides (22) whose translation axis is vertical.

9. The device according to any of the preceding claims, **characterised in that** the horizontal plate (38) of the platform (5) comprises a deployable anti-drift barrier (11).

10. The device according to any of the preceding claims, **characterised in that** the cavity (9) of the base (4) is a cylindrical cavity in which the rotation frame (16) is rotatably mounted.

11. The device according to claim 10, **characterised in that** the base (4) comprises a notch (10) for access to the cylindrical cavity (9).

12. The device according to one of claims 10 and 11, **characterised in that** the rotation frame (16) is mounted so as to rotate about a vertical axis on a circular rail (14) fixed in the cylindrical cavity (10) of the base (4).

13. The device according to claim 12, **characterised in that** the rotation frame (16) comprises sliders (31) for guidance on the circular rail (14).

14. The device according to one of claims 12 and 13, **characterised in that** the rotation frame (16) comprises a wheel (33) meshing with the circular rail (14) and controlling the rotation of the rotation frame (16) with respect to the base (4).

15. The device according to one of claims 12 to 14, **characterised in that** it comprises a threshold (13) attached to the base (4) and whose level is above the circular rail (14).

16. The device according to any of the preceding claims, **characterized in that** the lifting arm (20a, 20b) supports the lifting pulley (21a, 21b) and a sliding connection (22) with the platform (5).

17. The device according to any of the preceding claims, **characterised in that** the lifting device (23) comprises a reel (24) for the flexible link, which is driven by a motor (26) and is attached to the rotation frame (16).

18. The device according to any of the preceding claims, **characterised in that** the lifting device (23) is connected to the platform (5) by a lifting beam (27a, 27b).

19. The device according to any of the preceding claims, **characterised in that** the base (4) comprises all the mechanical and electrical interfaces of the device.
